Europäisches Patentamt

(19) European Patent Office

Office européen des brevets

(11) Publication number : 0 371 357 B1

## (12) EUROPEAN PATENT SPECIFICATION

(45) Date of publication of patent specification :
28.12.94 Bulletin 94/52

(51) Int. Cl.⁵ : **H04B 7/26,** H04J 3/06,
H04L 25/02

(21) Application number : 89121329.0

(22) Date of filing : 17.11.89

(54) **Method of determination of signal reception time by means of correlation technique.**

(30) Priority : 28.11.88 GB 8827732
28.11.88 GB 8827734

(43) Date of publication of application :
06.06.90 Bulletin 90/23

(45) Publication of the grant of the patent :
28.12.94 Bulletin 94/52

(84) Designated Contracting States :
AT BE CH DE ES FR GB GR IT LI LU NL SE

(56) References cited :
EP-A- 0 096 854
EP-A- 0 157 692
DE-A- 3 522 859
US-A- 3 766 316

(56) References cited :
MICROPROCESSOR & MICROSYSTEM, vol.
12, no.4, May 1988, pages 214-223, Butterworth
& Co.Ltd, London, GB; J. ELDON:
"Applications of the digital correlator"
IDEM

(73) Proprietor : STORNO A/S
Artillerivej 126
DK-2300 Copenhagen S (DK)

(72) Inventor : Pedersen, Per. E.
4A C.V.E. Knuthsvej
DK-2900 Hellerup (DK)

(74) Representative : Dunlop, Hugh Christopher et
al
Motorola
European Intellectual Property
Midpoint
Alencon Link
Basingstoke, Hampshire RG21 1PL (GB)

## Description

This invention relates to a method of determining the time of reception of a code, such as a Barker code in a demodulated radio signal.

In the field of cellular radio, a mobile radio identifies a telegram received from a base station by receiving a code, such as a Barker code, which it is able to distinguish from general background noise so as to determine that a data signal is imminent. The mobile must use the received code to determine the timing of future events, including decoding of an incoming telegram and time of transmission in response.

By way of example, EP-A-0157692 describes cross correlation of a locally developed code sequence and an incoming code sequence.

The accurate determination of the timing of receipt of this code is important to the operation of the mobile.

According to a first aspect of the present invention, there is provided a method of determining the timing of receipt of a signal containing a predetermined code, the method comprising the steps of:

(i) providing a digital representation of the received code;

(ii) correlating the representation of the received code with a stored true version of the code to provide a first number of points of correlation therebetween in a region in which correlation increases with incremental offset shifts between the representation and the true version of the code;

(iii) shifting the representation of the code by an incremental offset in time relative to the true code and repeating the correlation to provide at least a second number of points of correlation therebetween in a region in which correlation decreases with incremental offset shifts between the representation and the true version of the code;

(iv) providing values for the rates of increase and decrease in correlation per incremental offset shift;

(v) extrapolating the number of points of correlation in the region of increasing correlation and in the region of decreasing correlation; and

(vi) determining the time at which the extrapolated increase coincides with the extrapolated decrease, thereby to determine the time of optimum correlation to an accuracy greater than the incremental offset.

Preferably, the rate of increase and decrease per incremental offset for the basis of extrapolation is taken to be substantially equal to the number of logic state transitions in the predetermined code. As an alternative, the rate of increase and decrease per incremental offset can be measured by further incremental offset shifts in time between the representation of the code and the true code.

Accurate and reliable detection and timing of zero crossing events is important in the demodulation of the radio signals. In existing mobile cellular radios, it is known to take average zero crossings from incoming data to integrate these in a clock regeneration scheme, and to read the peaks of the data by means of the regenerated clock.

It would be desirable to read the data directly into a microprocessor, with no clock, and to keep time tags on all the zero crossings. In theory, this would allow for greater accuracy in timing of the zero crossings, however this presents a problem when there is noise in the signal which, if no hysteresis is used, results in multiple zero crossings, thereby presenting an excessive processing burden on the microprocessor. On the other hand, if hysteresis is used to eliminate unwanted zero crossings, timing errors will arise.

It would be desirable to provide a method of signal processing for determining zero crossing events which determines whether this event is to be used for output shift or is to be disregarded as caused by noise and provides for improved accuracy of timing of the events.

A preferred embodiment of the invention will now be described by way of example, with reference to the figures, in which:

Figure 1 shows a Barker code, the same code delayed by an incremental offset in time, and the result of correlation calculation between these;

Figure 2 shows a plot of correlations against time around the point of maximum correlation;

Figure 3 shows apparatus for carrying out the preferred embodiment of the invention;

Figure 4 shows a zero crossing detector for use with the preferred embodiment of the invention and

Figure 5 shows a typical signal on which the zero crossing is to be carried out.

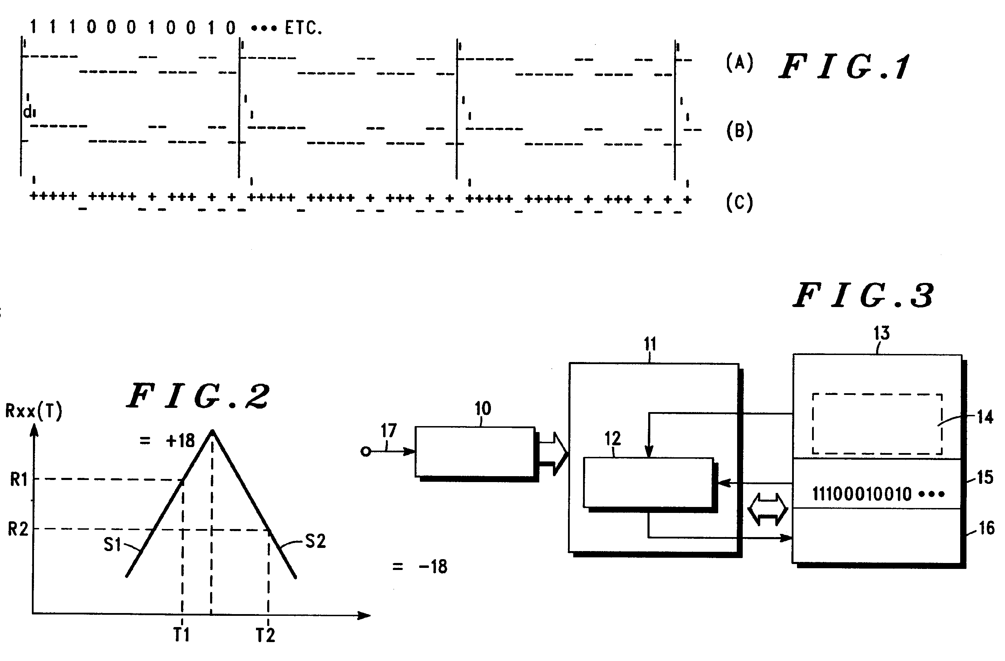

Referring to Figure 1, the sequence of data bits (a) is a Barker code. The code comprises the data pattern 11100010010, repeated three times, with an additional "1". Thus, the total code comprises 34 bits. This code, or 'preamble' forms the first 34 bits of a 184 bit data block, this being the standard FUKO format. The main characteristic of a Barker code is that its autocorrelation function exhibits a single triangular peak embedded in an almost flat environment. It will be noted that the total preamble has 18 logic state transitions.

On the same figure, there is shown the same code, as it might typically be received, after the radio signal has been demodulated. The received code is shifted by an offset (d). The received code as shown contains no errors. In practice the received signal will always be deteriorated to some extent by added noise. The noise appears as jitter on the 0/1 and 1/0 data edges. It may also be noted from the figure that each bit of the code is represented as two bits/samples. It will be appreciated that more samples could be used per bit, although this would increase the burden on the processor.

Finally, Figure 1 shows, at (c), the result of a correlation calculation between the bit streams (a) and (b). It can be noted that a minus-sign is shown at the eighteen bit shifts. This is because the offset (d) gives rise to incorrect correlation, which is manifested at the logic state transitions.

The situation will now be considered where the radio is attempting to determine the timing of this received Barker code at the beginning of a transmission for a telegram, so as to determine the timing of each subsequent bit of the anticipated telegram.

It will be assumed that a potential Barker code has been detected by a manner known in the art. Once a potential Barker code has been detected (e.g. by correlation of two of the three sequences of the Barker code), the radio 'knows' approximately when to expect correlation between the preamble and the code (a) stored in memory. Around the time of full correlation, the procedure is as follows.

The received preamble (b), and the stored code (a) are correlated with and without the offset shift (d). The results of this correlation are shown in figure 2. In this figure, times T1 and T2 are separated by an incremental period of time, equal to the offset (d) (i.e. one sample period). Times T1 and T2 lie within + or - one sample period from perfect correlation. R1 and R2 represent the number of points of correlation resulting from the correlation calculation between the received preamble and the stored code. It would be possible to take the time of maximum correlation (T1) as being the time of optimum correlation between the received preamble and the stored code. The time of optimum correlation, however, lies between T1 and T2, and by such a method the accuracy of determination of the time of optimum correlation is limited according to the sampling resolution. In Figure 2, the lines S1 and S2 have been drawn as representing the rate of increase and decrease respectively of correlation with respect to time. Over a time of one sampling period, the number of correlations will increase by 18 as the preamble approaches correlation (and will decrease by 18 as it recedes from correlation), this being the number of logic state transitions in the code. Accordingly, lines S1 and S2 have been drawn with a gradient of +18 and -18 respectively. By extrapolation, the time of optimum correlation, T-start, can be calculated from these lines.

The calculation is straight forward. The time of optimum correlation lies in the solution of the following two equations:

$$R - R1 = 18 (T-T1) \text{ and}$$
$$R - R2 = -18 (T-T2).$$

The solution is therefore:

$$T\text{ - start } = \frac{(T1 + T2)}{2} - \frac{1}{18}\frac{R1 - R2}{2}$$

In order to identify the correlation times which lie within + or - one sampling period from T-start, a threshold can be set e.g. 30 bit correlations, i.e. in the above example 60 correlating samples since there are two samples per bit, representing almost perfect correlation, and allowing for detection of a non-perfect signal - i.e. allowing three complete bit errors.

The above description has been given with reference to concentrated signalling.

The auto correlation function, $R_{xx}(d)$ of a signal x is defined as:

$R_{xx}(d) = E[x(t)x(t+d)]$ : (d=delay, x(t)=data sample to time t)
  : (E-expectation value)

Signal x could be the reference signal -i.e. the preamble code.

The auto correlation function, $R_{yy}(d)$, of a signal y is defined as $R_{yy}(d) = E[y(t)*y(t-d)]$.

Signal y could be the incoming signal, the received preamble code.

The two auto correlation functions, $R_{xx}(d)$ and $R_{yy}(d)$, are almost identical, except that noise would round off the peaks of the triangular shape of the $R_{yy}(d)$ function.

When the incoming signal y and the reference signal x are compared to each other, it is done by means of a cross correlation function $r_{xy}(d)$, which is defined as $R_{xy}(d) = E[x(t) y(t-d)]$.

It is the cross correlation function which is used for determination of the time distance between the estimated time of arrival and the actual time of arrival of the received Barker code.

For the preamble code, the $R_{xx}(d)$ shape will be triangular within +/- 1 bit from coincidence:

$R_{xx}(d) = 33 - 18|d|$    for $|d| < 1$ in the case of concentrated signalling, and
$R_{xx}(d) = 25 - 15|d|$ for $|d| < 1$ in the case of interleaved signalling.

(Strictly speaking, the $R_{xx}(d)$ function requires a scaling factor of 1/33 or 1/25 respectively, representing the analysed interval length).

For an interval covering 34 bits, half a bit is ignored at each end, with the result that a maximum of 34 bits can coincide.

For interleaved signalling, the 34 bits are separated into 4-bit blocks; bit shifts coinciding with the 4 bit limits cannot be checked, therefore only 15 of the possible 18 bit shifts can contribute.

Referring to figure 3, there is shown an analog-to-digital converter 10, a microprocessor 11, having a comparator register 12, and memory 13. The memory 13 is shown as storing zero crossing information 14, a preamble code 15 and correlation information 16. There is an incoming signal 17 from a receiving apparatus (not shown).

The operation of the apparatus is as follows. The signal 17 from the receiving apparatus is converted to digital form by the A/D converter 10 and zero crossing events are detected in a manner described below. From these, the incoming bit stream is derivable, and this information is stored at 14 in memory 13. From the information 14, a first representation of the received code is passed to the register 12. At the same time, the stored preamble code 15 is also passed to the register 12. A simple exclusive NOR operation is carried out on these two sets of data, and the results of the correlation, indicating the number of correlating bits, is passed to memory 13 (shown at 16). This gives the value R1 at time T1. A second representation of the received code, shifted in time by one incremental offset (being the resolution to which the zero crossing events are registered in memory 13) is passed to register 12, and the operation is repeated. From this, R2 at time T2 is calculated, and the above calculation for T-start is performed by the microprocessor 11, in a straightforward manner.

The received bit stream may be derived in a number of ways. One such way is now described in detail.

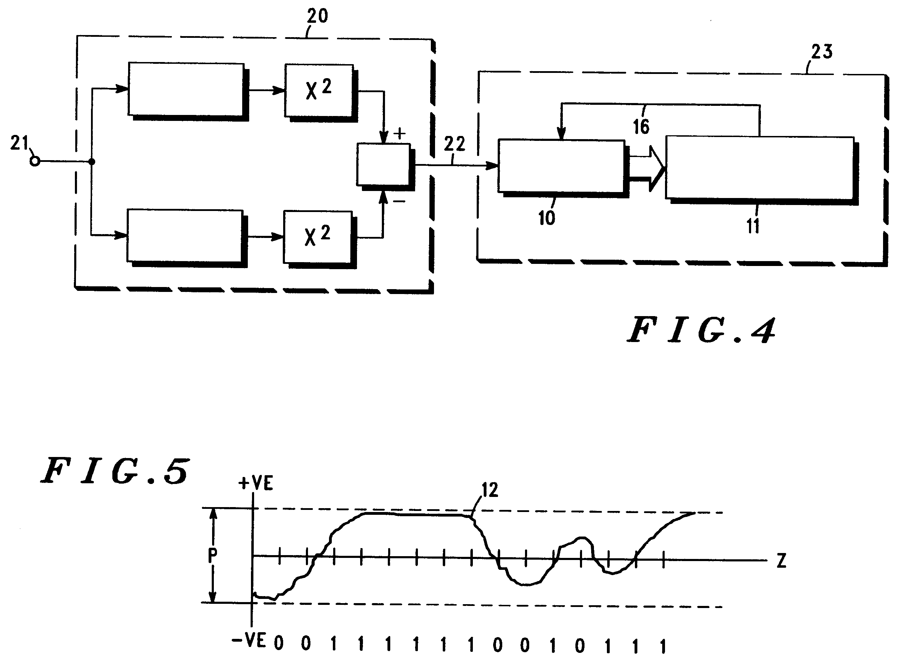

Referring to Figure 4, there is shown a typical FSK demodulator 20 comprising bandpass filters, squaring circuits and a difference circuit as are known in the art and need not be described in detail. It will be understood that various other filters could be included in the demodulator. The demodulator receives a modulated R.F. signal 21 and provides a "raised cosine" signal 22 from which digital data is to be recovered. A zero crossing detector 23 in accordance with the present invention is shown, which comprises an analog-to-digital converter 10 (as in Figure 1) and a microprocessor 11. The microprocessor contains a clock which gives a high rate sampling signal 26 to the A/D converter 10.

The baud rate is typically 5.28k and the A/D sampling rate is typically 0.66 MHz.

The operation of the apparatus of Figure 4 will be described with reference to Figure 5. This figure shows a typical waveform for signal 22 such as might be received by a mobile radio from a cellular base station. The waveform varies from positive values representing 1's to negative values representing O's. The waveform has a peak-to-peak value shown as P, and is shown as being centred about a zero level Z, The figure shows the signal as having a degree of noise. Consequently, where the signal crosses the zero level Z, there are often multiple crossings. The baud rate is represented by gradations of the zero level axis, and the data represented is shown at the bottom of the figure.

The zero crossing detector 23 samples the signal 22 at the sampling rate of 0.66 MHz.

The microprocessor 25 performs an algorithm on the sample which has the effect that minus-to-plus zero-crossings are detected by a minus-epsilon-to-zero hysteresis circuit, while plus-to-minus zero-crossings are detected by an epsilon-to-zero hysteresis circuit.

The time of a potential zero-crossing, and not the time of the epsilon crossing, nor the time of the minus-epsilon crossing is detected as the time of the valid zero crossing.

Transition from 0 to 1 occurs in two cases:
1. rising zero-crossing
2. rising plus-epsilon-crossing (forced transition)
Transition from 1 to 0 occurs in two cases:
1. falling zero-crossing
2. falling minus-epsilon-crossing (forced transition)
Zero crossing detection and logic state confirmation actions are represented by the following table:

EP 0 371 357 B1

From:

| State Confirmed | | Input | Action | State | |
|---|---|---|---|---|---|
| Confirmed | | | | | |
| 0 | yes | V > 0 | Zero-cross detection | 1 | no |
| 1 | no | V > E | Confirmation of '1' | 1 | yes |
| 1 | yes | V < 0 | Zero-cross detection | 0 | 0 |
| 0 | no | V < -E | Confirmation of '0' | 0 | yes |

After a transition the output is frozen for delta seconds, where delta is 75 microseconds. This is equivalent to 39.6% of a bit period of the 5.78k band FSK signal.

A numerical example is as follows.

An example of a suitable algorithm is as follows:-

Algorithm

```
Time        T
Input       X
Epsilon     E
Delta       D
Freeze      F
Confirmed   C
Output      Y
aux.        A,B
Y  = .FALSE.
F  = 0
C  = .TRUE
```

5

```
DO T=1,10000..
   READ X
   IF (F.GT.O) THEN
      F = F-1
   ELSE
      A= (ABS(X).GT.E)
                B= (X.GT.O.XOR.Y)
      IF(B.AND.(A.OR.C))        F= D
      IF(B.AND.(A.OR.C))        Y= .NOT.Y
      IF(A)                     C= .TRUE.
      IF(.NOT.A.AND.B.AND.C.)   C=.FALSE.
   ENDIF
   WRITE T;X;Y
ENDDO
```

Example:

```
Freezing time DELTA          4 time counts
  Threshold level EPSILON    3.0 volts
Time       In        Out           Confirmed       Freeze
```

| Time | In | Out | Confirmed | Freeze |
|---|---|---|---|---|
| 0 | 0.0 | 0 | no | 0 |
| 1 | 0.1 | 0 | no | 0 |
| 2 | 0.2 | 0 | no | 0 |
| 3 | 1.0 | 0 | no | 0 |
| 4 | 2.0 | 0 | no | 0 |
| 5 | 3.0 | 0 | no | 0 |
| 6 | 3.1 | 1 | yes | 4 |
| 7 | 4.0 | 1 | yes | 3 |
| 8 | -9.0 | 1 | yes | 2 |
| 9 | 0.0 | 1 | yes | 1 |
| 10 | 1.0 | 1 | yes | 0 |
| 11 | 0.1 | 1 | yes | 0 |
| 12 | -0.1 | 0 | no | 4 |
| 13 | 0.1 | 0 | no | 3 |
| 14 | 2.0 | 0 | no | 2 |
| 15 | 3.0 | 0 | no | 1 |
| 16 | 2.0 | 0 | no | 0 |
| 17 | 1.0 | 0 | no | 0 |
| 18 | -1.0 | 0 | no | 0 |
| 19 | -2.0 | 0 | no | 0 |
| 20 | -3.0 | 0 | no | 0 |
| 21 | -3.1 | 0 | yes | 0 |
| 22 | 9.0 | 1 | yes | 4 |
| 23 | -9.0 | 1 | yes | 3 |
| 24 | 9.0 | 1 | yes | 2 |
| 25 | -9.0 | 1 | yes | 1 |
| 26 | -5.0 | 0 | yes | 4 |
| 27 | -3.0 | 0 | yes | 3 |
| 28 | -1.0 | 0 | yes | 2 |

| 29 | −0.1 | 0 | yes | 1 |
|---|---|---|---|---|
| 30 | 0.1 | 1 | no | 4 |
| 31 | 2.0 | 1 | no | 3 |
| 32 | 3.0 | 1 | no | 2 |
| 33 | 4.0 | 1 | no | 1 |
| 34 | 5.0 | 1 | yes | 0 |
| 35 | 1.0 | 1 | yes | 0 |
| 36 | −0.1 | 0 | no | 4 |
| 37 | −3.1 | 0 | no | 3 |
| 38 | 1.0 | 0 | no | 2 |
| 39 | 1.0 | 0 | no | 1 |
| 40 | −3.1 | 0 | yes | 0 |
| 41 | 0.1 | 1 | no | 4 |

The bounce-free zero crossing detector may be used in any application where exact timing of zero crossings is required.

When the two parameters: confirmation threshold level, epsilon; and freezing time, delta are adequately selected, the detector will have many possible applications in the low-and medium frequency range of data detection.

As a further feature, the following steps may optionally be implemented. From the samples, the peak positive and negative values are determined, thereby giving the value P. The peak values are periodically updated, however in practice it is found that the frequency specification of signals transmitted by base stations is so tight that there is very little variation of P with time. The mid-point between the positive and negative peak values is determined by the microprocessor, and this point is shown on Figure 5 as the level Z. This is the virtual zero level referred to above. It does not necessarily coincide with zero volts in the signal 22.

An alternative method of determining the zero level is as follows. When a preamble code, indicating the start of a telegram, is received, the durations of all the periods of logic 1 are summed, and the durations of all the periods of logic 0 are summed. The preamble code may be the code 11100010010 repeated three times, followed by 1 - i.e. 34 bits in total. From this, the exact expected ratio of high to low periods is known. If the measured ratio of high to low periods is higher than this, then the zero level is raised, and vice versa, until the measured ratio calls within a satisfactory range.

In the above description, the demodulator may be, and preferably is, implemented digitally, the A/D converter being used on the signal 21.

The data samples are not, of course, stored indefinitely, but are written over after a predetermined number of counts. Only the events of output shift from the bounce-free zero crossing detector are stored as time tags with a resolution in time of 1.5 micro sec.

If a radio incorporating the zero crossing detector is on, and is expecting data, but there is no incoming signal, the signal to be processed will comprise nothing but noise. This noise will be amplified to almost normal data levels. This signal is baud limited, so it resembles pink noise. If this signal is processed in accordance with the invention, it will result in a random bit stream having a baud rate of approximately 6-7k baud. Such is the case if the predetermined period of time is 39.6% of a bit period. if this predetermined time (delta), during which further registrations of valid zero crossings are suppressed, is 5% or 10% of the bit period, then the incoming noise would give rise to a baud rate many times greater. In this case the software would be overloaded.

If delta is very high, e.g. 80% of the bit period, then a good signal to noise ratio will be achieved, but in the event of a single bit error (a noise spike) then the zero crossing detector may take a false decision, which will be confirmed, and the detector will be frozen for a very long time. The next following bit will then be too long, giving the appearance of an echo.

The predetermined period of time is preferably between 30% and 60% of a bit period.

Preferably the signal contains a stream of data bits having a predetermined baud rate and is sampled by analog-to-digital conversion means at a rate substantially higher than the baud rate and, upon registering of a valid zero crossing, the timing of the valid zero crossing is registered, whereby said timing can be measured to an accuracy dependent on the sampling rate.

The predetermined amount may be a predetermined fraction of the peak-to-peak value. That fraction is preferably from 1/2 to 1/10 and more preferably within the range 1/4 to 1/6.

It will, of course, be understood that the above description has been given by way of example only and that modifications of detail can be made within the scope of the invention as defined in the claims.

## Claims

1. A method of determining the timing of receipt of a signal containing a predetermined code having a predetermined number of logic state transitions, the method comprising the steps of:

   i) providing a first digital representation of the received code;

   ii) correlating the first representation of the received code with a stored true version of the code to provide a first number ($R_1$) of points of correlation therebetween in a region in which correlation increases with incremental offset shifts between the representation and the true version of the code;

   iii) providing a second digital representation of the received code, shifted by an incremental offset ($T_2 - T_1$) in time relative to the first representation and repeating the correlation to provide at least a second number ($R_2$) of points of correlation in a region in which correlation decreases with incremented offset shifts between the representation and the true version of the code;

   iv) providing values for the rates of increase and decrease in correlation per incremental offset shift;

   v) extrapolating the number of points of correlation in the region of increasing correlation and in the region of decreasing correlation; and

   vi) determining the time at which the extrapolated increase coincides with the extrapolated decrease, thereby to determine the time of optimum correlation to an accuracy greater than the incremental offset.

2. A method according to claim 1, wherein the rate of increase and decrease per incremental offset for the basis of extrapolation is taken to be equal to the predetermined number of logic state transitions.

3. A method according to claim 2, wherein the time of optimum correlation is calculated in accordance with the formula:

$$T - start = \frac{(T1 + T2)}{2} - \frac{1}{alpha} \cdot \frac{(R1 - R2)}{2}$$

   where: T-start is the time of optimum correlation; T1 and T2 are points in time within +/- 1 incremental offset of T-start;

   R1 and R2 are the number of points of correlation at times T1 and T2 respectively; and

   alpha is the rate of increase/decrease of points of correlation per incremental offset shift.

4. A method according to claim 1, wherein the rates of increase and decrease are measured by repeating the correlation at a plurality of incremental offset shifts.

5. Apparatus for determining the timing of receipt of a signal containing a predetermined code, comprising:

   i) means for providing at least first and second digital representations of the received code separated by an incremental offset in time;

   ii) means (13) for storing a true version (15) of the code;

   iii) means (12) for correlating the representations of the received code with the true version to provide at least first and second numbers of points of correlation therebetween in regions of increasing and decreasing correlation respectively;

   iv) means for providing values for the rates of increase and decrease in correlation per incremental offset shift in said regions of increasing and decreasing correlation respectively;

   v) means for extrapolating the number of points of correlation in the region of increasing correlation and in the region of decreasing correlation and for determining the time at which the extrapolated increase coincides with the extrapolated decrease, thereby to determine the time of optimum correlation to an accuracy greater than the incremental offset.

## Patentansprüche

1. Verfahren zum Bestimmen der Empfangszeit eines Signals, das einen vorbestimmten Code mit einer vorbestimmten Anzahl von Logikzustandsänderungen aufweist, umfassend die Schritte:

i) Erzeugen einer ersten digitalen Darstellung des empfangenen Codes;

ii) Korrelieren der ersten Darstellung des empfangenen Codes mit einer gespeicherten, wahren Version des Codes, um eine erste Anzahl ($R_1$) Korrelationspunkten zwischen ihnen in einem Bereich zu erzeugen, in dem Korrelation mit inkrementellen Versatzverschiebungen zwischen der Darstellung und der wahren Version des Codes zunimmt;

iii) Erzeugen einer zweiten digitalen Darstellung des empfangenen Codes, um einen inkrementellen Versatz ($T_2$-$T_1$) in der Zeit relativ zur ersten Darstellung verschoben, und Wiederholen der Korrelation, um wenigstens eine zweite Anzahl ($R_2$) von Korrelationspunkten in einem Bereich zu erzeugen, in dem Korrelation mit inkrementierten versatzverschiebungen zwischen der Darstellung und der wahren Version des Codes abnimmt;

iv) Erzeugen von Werten für die Zunahme- und Abnahmeraten in Korrelation pro inkrementeller Versatzverschiebung;

v) Extrapolieren der Anzahl der Korrelationspunkte in dem Bereich zunehmender Korrelation und in dem Bereich abnehmender Korrelation; und

vi) Bestimmen der Zeit, zu der die extrapolierte Zunahme mit der extrapolierten Abnahme übereinstimmt, um dadurch die Zeit optimaler Korrelation mit einer Genauigkeit zu bestimmen, die größer als der inkrementelle Versatz ist.

2.  Verfahren nach Anspruch 1, bei dem die Zunahmerate und die Abnahmerate pro inkrementellem Versatz für die Extrapolationsbasis als gleich der vorbestimmten Anzahl Logikzustandsänderungen genommen wird.

3.  Verfahren nach Anspruch 2, bei dem die Zeit optimaler Korrelation nach der Gleichung berechnet wird:

$$T \text{ - Start} = \frac{(T1 + T2)}{2} - \frac{1}{alpha} \cdot \frac{(R1 - R2)}{2}$$

wobei: T-Start die Zeit optimaler Korrelation;

T1 und T2 Zeitpunkte innerhalb +/- 1 inkrementellen Versatz von T-Start sind;

R1 und R2 die Anzahl Korrelationspunkte zu den Zeitpunkten T1 bzw. T2 sind; und

Alpha die Zunahme-/Abnahme-Rate der Korrelationspunkte pro inkrementeller Versatzverschiebung ist.

4.  Verfahren nach Anspruch 1, bei dem die Zunahme- und Abnahmeraten durch Wiederholung der Korrelation an mehreren inkrementellen versatzverschiebungen gemessen wird.

5.  Vorrichtung zum Bestimmen des Empfangszeitpunktes eines Signals, das einen vorbestimmten Code enthält, enthaltend:

i) Einrichtungen zum Erzeugen wenigstens erster und zweiter digitaler Darstellungen des empfangenen Codes, getrennt durch einen inkrementellen Zeitversatz;

ii) Einrichtungen (13) zum Speichern einer wahren Version (15) des Codes;

iii) Einrichtungen (12) zum Korrelieren der Darstellungen des empfangenen Codes mit der wahren Version, um wenigstens erste und zweite Anzahlen von Korrelationspunkten zwischen ihnen in Bereichen zunehmender bzw. abnehmender Korrelation zu erzeugen;

iv) Einrichtungen zum Erzeugen von Werten für die Zunahme- und Abnahme-Raten in Korrelation pro inkrementeller Versatzverschiebung in den Bereichen zunehmender bzw. abnehmender Korrelation;

v) Einrichtungen zum Extrapolieren der Anzahl von Korrelationspunkten in dem Bereich zunehmender Korrelation und in dem Bereich abnehmender Korrelation und zum Bestimmen der Zeit, zu dem die extrapolierte Zunahme mit der extrapolierten Abnahme übereinstimmt, um dadurch die Zeit optimaler Korrelation mit einer Genauigkeit zu bestimmen, die größer als der inkrementelle Versatz ist.

## Revendications

1.  Procédé de détermination de la synchronisation de réception d'un signal contenant un code prédéterminé possédant un nombre prédéterminé de transitions d'état logique, procédé comprenant les étapes suivantes :

1) la constitution d'une première présentation numérique du code reçu;

2) la corrélation de la première représentation du code reçu avec une version représentative stockée du code pour constituer un premier nombre (R1) de points de corrélation intercalés dans une zone où la corrélation augmente avec des décalages incrémentaux entre la représentation et la version représentative du code;

3) la constitution d'une seconde représentation numérique du code reçu, décalée d'un décalage incrémental (T2 - T1) dans le temps par rapport à la première représentation et la répétition de la corrélation pour constituer au moins un second nombre (R2) de points de corrélation dans une zone où la corrélation diminue avec les décalages incrémentés entre la représentation et la version représentative du code;

4) la constitution de valeurs pour les taux d'augmentation et de diminution de corrélation par décalage incrémental;

5) l'extrapolation du nombre de points de corrélation dans la zone de corrélation croissante et dans la zone de corrélation décroissante; et

6) la détermination de l'instant auquel l'augmentation extrapolée coïncide avec la diminution extrapolée afin de déterminer ainsi l'instant de la corrélation optimale avec une précision supérieure au décalage incrémental.

2. Procédé selon la revendication 1, selon lequel le taux d'augmentation et de diminution par décalage incrémental pour la base de l'extrapolation est pris égal au nombre prédéterminé de transitions d'état logique.

3. Procédé selon la revendication 2, selon lequel l'instant de corrélation optimale est calculé selon la formule suivante :

$$T - start = \frac{(T1 + T2)}{2} - \frac{1}{alpha} \frac{(R1 - R2)}{2}$$

où T-start est l'instant de corrélation optimale;

T1 et T2 sont des points dans le temps compris dans +/- 1 décalage incrémental de T-start;

R1 et R2 sont les nombres de points de corrélation aux instants respectifs T1 et T2; et

alpha est le taux d'augmentation/diminution des points de corrélation par décalage incrémental.

4. Procédé selon la revendication 1, selon lequel les taux d'augmentation et de diminution sont mesurés en répétant la corrélation sur une pluralité de décalages incrémentaux.

5. Dispositif de détermination de la synchronisation de la réception d'un signal contenant un code prédéterminé, dispositif comprenant :

1) un moyen pour fournir au moins des première et seconde représentations numériques du code reçu séparées par un décalage incrémental dans le temps;

2) un moyen (13) pour stocker une version représentative (15) du code;

3) un moyen (12) pour faire la corrélation des représentations du code reçu avec la version représentative pour constituer au moins des premier et second nombres de points de corrélation intercalés dans des zones de corrélations respectives croissante et décroissante;

4) un moyen pour fournir des valeurs pour les taux de croissance et de décroissance de la corrélation par décalage incrémental dans lesdites zones respectives de corrélation croissante et décroissante; et

5) un moyen pour extrapoler le nombre de points de corrélation dans la zone de corrélation croissante et dans la zone de corrélation décroissante et pour déterminer l'instant auquel la croissance extrapolée coïncide avec la décroissance extrapolée afin de déterminer ainsi l'instant de corrélation optimale avec une précision supérieure au décalage incrémental.

*F I G. 1*

(A)

(B)

(C)

1 1 1 0 0 0 1 0 0 1 0 ••• ETC.

di

*F I G. 3*

13

14

15

11100010010 •••

16

11

12

10

17

o

= −18

*F I G. 2*

= +18

Rxx(T)

R1

R2

S1

S2

T1

T2

*FIG.4*

*FIG.5*